Europäisches Patentamt

European Patent Office

Office européen des brevets

(19)

(11) Publication number: **0 110 702**
**B1**

(12) **EUROPEAN PATENT SPECIFICATION**

(45) Date of publication of patent specification: **10.08.88**

(21) Application number: **83307243.2**

(22) Date of filing: **28.11.83**

(51) Int. Cl.[4]: **C 01 F 7/00, C 01 F 7/16,**
**C 01 F 17/00, C 01 G 29/00,**
**C 01 G 30/00, C 01 G 37/00,**
**C 01 G 3/00, C 01 G 49/00**

(54) Improved preparative process for alkaline earth metal, aluminum-containing spinels.

(30) Priority: **29.11.82 US 445305**

(43) Date of publication of application:
**13.06.84 Bulletin 84/24**

(45) Publication of the grant of the patent:
**10.08.88 Bulletin 88/32**

(84) Designated Contracting States:
**BE DE FR GB**

(56) References cited:
**EP-A-0 045 170**
**FR-A-2 390 382**
**US-A-2 992 191**
**US-A-3 300 277**
**US-A-3 791 992**
**US-A-4 081 408**

(73) Proprietor: **Katalistiks International,**
**Incorporated**
**39 Old Ridgebury Road**
**Danbury, Connecticut 06817-0001 (US)**

(72) Inventor: **Yoo, Jin Sun**
**2315 Mast Court**
**Homewood Illinois 60430 (US)**
Inventor: **Karch, John Albert**
**18420 Homewood**
**Homewood Illinois 60430 (US)**
Inventor: **Poss, Richard Frank**
**2023 Cummings Lane**
**Flossmoor Illinois 60422 (US)**
Inventor: **Burk, Emmett H., Jr.**
**1110 Ohio**
**Glenwood Illinois 60425 (US)**

(74) Representative: **Cropp, John Anthony David**
**et al**
**MATHYS & SQUIRE 10 Fleet Street**
**London, EC4Y 1AY (GB)**

Courier Press, Leamington Spa, England.

# 0 110 702

**Description**

This invention relates to the improved preparation of alkaline earth metal, aluminum-containing spinel compositions, particularly for use in the combusting of solid, sulfur-containing material in a manner to effect a reduction in the emission of sulfur oxides to the atmosphere. In one specific embodiment, the invention involves the catalytic cracking of sulfur-containing hydrocarbon feedstocks in a manner to effect a reduction in the amount of sulfur oxides emitted from the regeneration zone of a hydrocarbon catalytic cracking unit.

Typically, catalytic cracking of hydrocarbons takes place in a reaction zone at hydrocarbon cracking conditions to produce at least one hydrocarbon product and to cause carbonaceous material (coke) to be deposited on the catalyst. Additionally, some sulfur, originally present in the feed hydrocarbons, may also be deposited, e.g., as a component of the coke, on the catalyst. It has been reported that approximately 50% of the feed sulfur is converted to $H_2S$ in the FCC REACTOR, 40% remains in the liquid products and about 4 to 10% is deposited on the catalyst. These amounts vary with the type of feed rate of hydrocarbon recycle, steam stripping rate, the type of catalyst, reactor temperature, etc.

Sulfur-containing coke deposits tend to deactivate cracking catalyst. Cracking catalyst is advantageously continuously regenerated, by combustion with oxygen-containing gas in a regeneration zone, to low coke levels, typically below about 0.4% by weight, to perform satisfactorily when it is recycled to the reactor. In the regeneration zone, at least a portion of sulfur, along with carbon and hydrogen, which is deposited on the catalyst, is oxidized and leaves in the form of sulfur oxides ($SO_2$ and $SO_3$, hereinafter referred to as "SOx") along with substantial amounts of CO, $CO_2$ and $H_2O$.

Considerable recent research effort has been directed to the reduction of sulfur oxide emissions from the regeneration zones of hydrocarbon catalytic cracking units. One technique involved circulating one or more metal oxides capable of associating with oxides of sulfur with the cracking catalyst inventory in the regeneration zone. When the particles containing associated oxides of sulfur are circulated to the reducing atmosphere of the cracking zone, the associated sulfur compounds are released as gaseous sulfur-bearing material such as hydrogen sulfide which is discharged with the products from the cracking zone and are in a form which can be readily-handled in a typical facility, e.g., petroleum refinery. The metal reactant is regenerated to an active form and is capable of further associating with the sulfur oxides when cycled to the regeneration zone.

Incorporation of Group II metal oxides on particules of cracking catalyst in such a process has been proposed (U.S. Patent No. 3,835,031 to Bertolacini). In a related process described in U.S. Patent No. 4,071,436 to Blanton, et al., discrete fluidizable alumina-containing particles are circulated through the cracking and regenerator zones along with physically separate particles of the active zeolitic cracking catalyst. The alumina particles pick up oxides of sulfur in the regenerator, forming at least one solid compound, including both sulfur and aluminum atoms. The sulfur atoms are released as volatiles, including hydrogen sulfide, in the cracking unit. U.S. Patent No. 4,071,436 further discloses that 0.1 to 10 weight percent MgO and/or 0.1 to 5 weight percent $Cr_2O_3$ are preferably present in the alumina-containing particles. Chromium is used to promote coke burnoff.

A metallic component, either incorporated into catalyst particles or present on any of a variety of "inert" supports, is exposed alternately to the oxidizing atmosphere of the regeneration zone of an FCCU and the reducing atmosphere of the cracking zone to reduce sulfur oxide emissions from regenerator gases in accordance with the teachings of U.S. Patents Nos. 4,153,534 and 4,153,535 to Vasalos and Vasalos, et al., respectively. In Vasalos, et al., a metallic oxidation promoter such as platinum is also present when carbon monoxide emissions are to be reduced. These patents disclose nineteen different metallic components, including materials as diverse as alkaline earths, sodium heavy metals and rare earth, as being suitable reactants for reducing emissions of oxides of sulfur. The metallic reactants that are especially preferred are sodium, magnesium, manganese and copper. When used as the carrier for the metallic reactant, the supports that are used preferably have a surface area at least 50 square meters per gram. Examples of allegedly "inert" supports are silica, alumina and silica-alumina. The Vasalos and Vasalos, et al., patents further disclose that when certain metallic reactants (exemplified by oxides of iron, manganese or cerium) are employed to capture oxides of sulfur, such metallic components can be in the form of a finely divided fluidizable powder.

Similarly, a vast number of sorbents have been proposed for desulfurization of non-FCCU flue gases in zones outside the unit in which SOx is generated. In some such non-FCCU applications, the sorbents are regenerated in environments appreciably richer in hydrogen than the cracking zone of an FCC unit. Cerium oxide is one of fifteen adsorbents disclosed for flue gas desulfurization in a publication of Lowell, et al., "Selection of Metal Oxides for Removing SOx from Flue Gas", Ind. Eng. Chemical Process Design Development, Vol. 10, Nov. 3, 1971. In U.S. Patent No. 4,001,375 to Longo, cerium on an alumina support is used to absorb $SO_2$ from non-FCCU flue gas streams or automobile exhaust at temperatures of 300 to 800°C (572—1472°F), preferably 500 to 593°C (932—1100°F). The sorbent is then regenerated in a separate unit by contacting it with hydrogen mixed with steam at 500 to 800°C (932—1472°F). During regeneration the desorbed species is initially $SO_2$ and $H_2S$ along with excess reducing gases which can be used as feedstock for a Claus unit. The Longo patent is not concerned with reducing emission from an FCC unit and the reducing atmosphere employed in practice of this process differs significantly from the hydrocarbon-rich

2

atmosphere in a catalytic cracker. Thus a hydrocarbon cracking reaction zone is preferably operated in the substantial absence of added hydrogen while the presence of sweeping amounts of hydrogen gas is essential to the regeneration step in practice of the process of Longo.

D. W. Deberry, et al., "Rates of Reaction of $SO_2$ with Metal Oxides", Canadian Journal of Chemical Engineering, 49, 781 (1971) reports that cerium oxide was found to form sulfates more rapidly than most of the other oxides tested. The temperatures used, however, were below about 482°C (900°F) and thus below those preferred for use in catalyst regenerators in FCC units.

Many commercial zeolitic FCC catalysts contain up to 4% rare earth oxide, the rare earth being used to stabilize the zeolite and provide increased activity. See, for example, U.S. Patent No. 3,930,987 to Grand. The rare earths are most often used as mixtures of $La_2O_3$, $CeO_2$, $Pr_2O_{11}$, $Nd_2O_3$ and others. Some catalyst is produced by using a lanthanum-rich mixture obtained by removing substantial cerium from the mixture of rare earths. It has been found that the mere presence of rare earth in a zeolitic cracking catalyst will not necessarily reduce SOx emissions to an appreciable extent. .

In accordance with the teachings of U.S. Patent No. 3,823,092 to Gladrow, certain zeolitic catalyst compositions capable of being regenerated at a rate appreciably faster than prior art rare earth exchanged zeolitic catalyst compositions are produced by treating a previously rare earth exchanged zeolitic catalyst composition with a dilute solution containing cerium cations (or a mixture of rare earths rich in cerium). The final catalysts contain 0.5 to 4% cerium cations which are introduced to previously rare earth exchanged zeolitic catalyst particles prior to final filtering, rinsing and calcining. Cerium is described as an "oxidation promoter". There is not recognition or appreciation in the patent of the effect of the cerium impregnation on SOx stack emissions. Such impregnation of rare earth exchanged zeolitic catalyst particles is not always effective in producing modified catalysts having significant ability to bind oxides of sulfur in a FCC regenerator and release them in a FCC cracking reaction zone.

Thus, considerable amount of study and research effort has been directed to reducing oxide of sulfur emissions from various gaseous streams, including those from the stacks of the regenerators of FCC units. However, the results leave much to be desired. Many metallic compounds have been proposed as materials to pick up oxides of sulfur in FCC units (and other desulfurization applications) and a variety of supports, including particles of cracking catalysts and "inerts" have been suggested as carriers for active metallic reactants. Many of the proposed metallic reactants lose effectiveness when subjected to repeated cycling. Thus, when Group II metal oxides are impregnated on FCC catalysts or various supports, the activity of the Group II metals is rapidly reduced under the influence of the cyclic conditions. Discrete alumina particles, when combined with silica-containing catalyst particles and subjected to steam at elevated temperatures, e.g., those present in FCC unit regenerators, are of limited effectiveness in reducing SOx emissions. Incorporation of sufficient chromium on an alumina support to improve SOx sorption results in undesirably increased coke and gas production.

EP—A—45170 relates to improved materials for reducing SOx emissions, incorporating, respectively, spinel compositions, preferably alklaline earth metal-containing spinels, and spinel compositions including at least one additional metal component.

Various methods have been described for the preparation of alkaline earth aluminate spinels, and particularly of magnesium aluminate spinels. According to the method disclosed in U.S. Patent No. 2,992,191, the spinel can be formed by reacting, in an aqueous medium, a water-soluble magnesium inorganic salt and a water-soluble aluminum salt in which the aluminum is present in the anion. This patent does not teach controlling pH during the time the two salts are combined.

Another process for producing magnesium aluminate spinel is set forth in U.S. Patent No. 3,791,992. This process includes adding a highly basic solution of an alkali metal aluminate to a solution of a soluble salt of magnesium with no control of pH during the addition, separating and washing the resulting precipitate; exchanging the washed precipitate with a solution of an ammonium compound to decrease the alkali metal content; followed by washing, drying, forming and calcination steps.

There remains a need for improved spinel catalyst components, exhibiting good SOx removal properties, and for improved processing in their manufacture.

Summary of the invention

This invention relates to a novel process for the improved production of alkaline earth metal and aluminum-containing spinel compositions. Such spinels find particular use in diminishing the emissions of sulfur oxides from combustion zones, and more particularly in conjunction with catalytic compositions employed in hydrocarbon cracking processes.

The process of this invention further provides for the association of one or more additional components with the alkaline earth metal, aluminum-containing spinel composition.

The improved process of this invention particularly provides for the admixture of components in a concerted manner, whereby controlled pH conditions are maintained, and for a calcination of the resulting precipitate conducted at a temperature capable of effective spinel formation, preferably such that a suitably high surface area is achieved.

Other objects and advantages of this invention will be apparent from the following detailed description. .

0 110 702

According to the present invention, there is provided a process for the production of alkaline earth metal, aluminum-containing spinel compositions comprising:

a) combining (a) an acidic aqueous solution containing at least one alkaline earth metal component and (b) a basic aqueous solution containing at least one aluminum component in which the aluminum is present as an anion in an aqueous medium to form a combined mass including a liquid phase and an alkaline earth metal, aluminum-containing precipitate, provided that at least one of the acidic solution and the basic solution includes at least one additional metal component in an amount sufficient so that the alkaline earth metal, aluminum-containing spinel composition includes at least one additional metal component in an amount effective to promote the oxidation of $SO_2$ to $SO_3$ at $SO_2$ oxidation conditions, and further provided that the pH of the liquid phase during the combining is maintained in the range of 7.0 to 9.5, preferably in the range of 7.0 to 8.5; and

b) calcining the precipitate to form an alkaline earth metal, aluminum-containing spinel composition.

In a preferred embodiment, the above-noted step a) comprises substantially simultaneously adding the acidic aqueous solution and the basic aqueous solution to an aqueous liquid. In another preferred embodiment, the pH of the liquid phase is maintained in the range of about 7.0 to about 7.5 until no further acidic aqueous solution is to be combined.

The presently prepared spinel compositions may be used, for example, in the form of particles of any suitable shape and size. Such particles may be formed by conventional techniques, such as spray drying, pilling, tabletting, extrusion, bead formation (e.g., conventional oil drop method) and the like. When spinel-containing particles are to be used in a fluid catalytic cracking unit, it is preferred that a major amount by weight of the spinel-containing particles have diameters in the range of about 10 μm to about 250 μm, more preferably about 20 μm to about 125 μm.

This invention relates to the production of an alkaline earth metal and aluminum-containing spinel composition which also includes at least one additional metal component in an amount effective to promote the oxidation of $SO_2$ to $SO_3$ at $SO_2$ oxidation conditions. A desired concentration of at least one additional metal component is included in the acidic solution containing at least one alkaline earth metal component and/or in the basic solution containing the aluminum component noted above, preferably in the above-noted acidic solution. The above-noted calcination step provides a spinel composition having an effective amount of at least one additional metal component, as noted above.

The spinel structure is based on a cubic close-packed array of oxide ions. Typically, the crystallographic unit cell of the spinel structure contains 32 oxygen atoms. With regard to magnesium aluminate spinel, there often are eight Mg atoms and sixteen Al atoms to place in a unit cell ($8MgAl_2O_4$). Other alkaline earth metal ions, such as calcium, strontium, barium and mixtures thereof, may replace all or a part of the magnesium ions. Other trivalent metal ions, such as iron, chromium, gallium, boron cobalt and mixtures thereof, may replace a portion of the aluminum ions.

The presently useful alkaline earth metal and aluminum containing spinels include a first metal (alkaline earth metal) and aluminum as the second metal having a valence higher than the valence of the first metal. The atomic ratio of the first metal to the second metal in any given alkaline earth metal and aluminum containing spinel need not be consistent with the classical stoichiometric formula for such spinel. In one embodiment, the atomic ratio of the alkaline earth metal to aluminum in the spinels of the present invention is at least about 0.17 and preferably at least about 0.25. It is preferred that the atomic ratio of alkaline earth metal to aluminum in the spinel be in the range of about 0.17 to about 1, more preferably about 0.25 to about 0.75, and still more preferably about 0.35 to about 0.65.

The preferred spinel composition of the present invention is magnesium and aluminum-containing spinel composition.

The alkaline earth metal components useful in the present invention include those which are suitable to provide the above-noted spinel compositions. It is preferred that the alkaline earth metal component or components employed be substantially soluble in the acidic aqueous medium used. Examples of suitable alkaline earth metal component include nitrates, sulfates, formates, acetates, acetylacetonates, phosphates, halides, carbonates, sulfonates, oxalates, and the like. The alkaline earth metals include beryllium, magnesium, calcium, strontium, and barium. The preferred alkaline earth metal components for use in the present invention are those comprising magnesium.

As noted above, the aluminum components present in the basic solution useful in the present invention are those in which the aluminum is present as an anion. Preferably, the aluminum salt is present as an aluminate salt, more preferably as an alkali metal aluminate.

Any suitable acid or combination of acids may be employed in the presently useful acidic aqueous solutions. Examples of such acids include nitric acid, sulfuric acid, hydrochloric acid, acetic acid and mixtures thereof, with nitric acid, sulfuric acid and mixtures thereof being preferred. Any suitable basic material or combination of such materials may be employed in the presently useful basic aqueous solutions. Examples of such basic material include alkali metal hydroxides, ammonium hydroxide and mixtures thereof, with alkali metal hydroxides, and in particular sodium hydroxide, being preferred for use. The relative amounts of acids and basic materials employed are suitable to provide the desired alkaline earth metal, aluminum-containing precipitate and the pH control as noted above.

Spinel compositions resulting from the present invention have improved properties relative to spinels produced without the present pH control. For example, the presently preferred spinel compositions have

4

**0 110 702**

improved capabilities, e.g., stability, of reducing sulfur oxide atmospheric emissions from hydrocarbon catalytic cracking operations.

In this invention, particulate material comprising the alkaline earth metal and aluminum-containing spinel composition also contains at least one additional metal component. These additional metal components are defined as being capable of promoting the oxidation of sulfur dioxide to sulfur trioxide at combustion conditions, e.g., the conditions present in a hydrocarbon catalytic cracking unit regenerator. Increased carbon monoxide oxidation may also be obtained by including the additional metal components. Such additional metal components are selected from the group consisting of Group IB, IIB, IVB, VIA, VIB, VIIA and VIII of the Periodic Table, the rare earth metals, vanadium, iron, tin and antimony and mixtures thereof and may be incorporated into the presently useful spinel compositions by one or more embodiments of the process of this invention. The preferred additional metal component for use is selected from the group consisting of bismuth, rare earth metals, antimony, chromium, copper, iron, manganese, vanadium, tin and mixtures thereof.

Generally, the amount of the additional metal component or components present in the final product is small compared to the quantity of the spinel. Preferably, the present particles of the final product comprise a minor amount by weight of at least one additional metal component, more preferably up to about 20% by weight (calculated as elemental metal). Of course, the amount of additional metal used will depend, for example, on the degree of sulfur dioxide oxidation desired and the effectiveness of the additional metal component to promote such oxidation. When, as is more preferred, the additional metal component is rare earth metal component (still more preferably cerium component), the preferred amount of this additional metal component is within the range of about 1 to about 20 wt.%, more preferably about 5 to about 20 wt.% (calculated as the rare earth metal oxide) of the total final product.

The additional metal component may exist in the final product at least in part as a compound such as an oxide, sulfide, halide and the like, or in the elemental state.

The additional metal component(s) is (are) included in the spinel composition by being included in the aqueous acidic and/or basic solutions noted previously. It is preferred that the additional metal be present in such solution as a soluble form. Thus, the particular additional metal compound(s) selected should preferably be soluble (at the desired concentration) in the particular acidic or basic solution in question. It is well within the skill of the art to choose a suitable soluble additional metal component for use in the present process.

The precipitate, which is preferably dried, is calcined to yield the alkaline earth metal, aluminum-containing spinel composition. Drying and calcination may take place simultaneously. However, it is preferred that the drying take place at a temperature below that at which water of hydration is removed from the spinel precursor, i.e., precipitate. Thus, this drying may occur in flowing air at temperatures below about 260°C (500°F), preferably in the range of about 66°C (150°F) to about 232°C (450°F), more preferably about 110°C (230°F) to about 232°C (450°F). Alternatively, the precipitate can be spray dried.

The drying of the precipitate can be accomplished in various manners, for example, by spray drying, drum drying, flash drying, tunnel drying and the like. The drying temperature or temperatures is/are selected to remove at least a portion of the liquid phase. Drying times are not critical to the present invention and may be selected over a relatively wide range sufficient to provide the desired dried product. Drying times in the range of about 0.2 hours to about 24 hours or more may be advantageously employed.

Spray drying equipment which is conventionally used to produce catalyst particles suitable for use in fluidized bed reactors may be utilized in the practice of the present invention. For example, this equipment may involve at least one restriction or high pressure nozzle having a diameter in the range from about 0.25 mm (0.01 in) to about 0.51 mm (0.2 in), preferably from about 0.33 mm (0.013 in) to about 3.8 mm (0.15 in). The pressure upstream of this high pressure nozzle may range from about 27.2 $kg/cm^2g$ (400 psig) to about 680 $kg/cm^2g$ (10,000 psig), preferably from about 27.2 $kg/cm^2g$ (400 psig) to about 476 $kg/cm^2g$ (7,000 psig). The material to be dried is sent through the nozzle system into a space or chamber. The pressure in the space or chamber downstream from the nozzle system is lower than that immediately upstream of the nozzle and is typically in the range from about 0 $kg/cm^2g$ (0 psig) to about 6.8 $kg/cm^2g$ (100 psig), preferably from about 0 $kg/cm^2g$ (0 psig) to about 1.36 $kg/cm^2g$ (20 psig). Once through the nozzle, the material to be dried is contacted for a relatively short time, e.g., from about 0.1 seconds to about 20 seconds with a gas stream which is at a temperature of from about 93°C (200°F) to about 816°C (1500°F), preferably from about 93°C (200°F) to about 399°C (750°F). The gas stream which may be, for example, air or the flue gases from an inline burner (used to provide a gas stream having the proper temperature) or a substantially oxygen-free gas, may flow co-current, counter-current or a combination of the two relative to the direction of flow of the material to be dried. The spray drying conditions, such as temperatures, pressures and the like, may be adjusted because, for example, of varying the composition of the material to be dried to obtain optimum results. However, this optimization may be achieved through routine experimentation.

An alternative to the high pressure nozzle described above is the "two-fluid" nozzle in which the material to be dried is dispersed by a stream of gas, typically air. The two fluid nozzle has the advantage of low operating pressure, e.g., from about 0 $kg/cm^2g$ (0 psig) to about 4.1 $kg/cm^2g$ (60 psig) for the material to be dried and from about 6.8 $kg/cm^2g$ (10 psig) to about 68 $kg/cm^2g$ (100 psig) for the dispersing gas. The dispersing gas may also function as at least a portion of the drying gas stream. The various operating parameters noted above may be varied in order to achieve the correct or desired bound particle size.

5

**0 110 702**

In order to minimize contact between the chamber walls and wet material, the chamber downstream from the nozzle system is large in size, e.g., from about 1.22 to about 9.14 m (about 4 to about 30 feet) in diameter and from about 2.13 to about 9.14 m (about 7 to about 30 feet) long, often with an additional conical shaped portion for convenient withdrawal of the dried material. The spray drying apparatus may also include separation means, e.g., cyclone separators, in the outlet gas line to recover at least a portion of the dried material entrained in this stream.

Suitable calcination temperatures for the precipitate are in the range of about 538°C (1000°F) to about 982°C (1800°F). However, it has been found that improved spinel formation occurs when the calcination temperature is maintained within the range of about 566°C (1050°F) to about 871°C (1600°F), more preferably about 593°C (1100°F) to about 760°C (1400°F) and still more preferably about 621°C (1150°F) to about 732°C (1350°F). Calcination of the precipitate may take place in a period of time in the range of about 0.5 hours to about 24 hours or more, preferably in a period of time in the range of about 1 hour to about 10 hours. The calcination of the precipitate may occur at any suitable conditions, e.g., inert, reducing or oxidizing conditions, which oxidizing conditions be preferred.

In one preferred embodiment of this invention, calcination of the precipitate is effected at oxidizing conditions, e.g., in a stream of flowing air. These conditions are especially preferred when a cerium component is present in the formulation in order to prevent or minimize interaction between cerous ions and the spinel base.

A preferred alkali metal aluminate is sodium aluminate. Although the mineral acid may be nitric, hydrochloric, or sulfuric acid, the preferred alkaline earth metal salt is magnesium nitrate and the preferred mineral acid is nitric acid.

The concerted technique of this invention affords a precipitate phase which may be directly washed with water or, optionally, first permitted to age for up to about 24 hours at ambient temperature or elevated temperatures, prior to any further processing. Separation of the precipitate phase may be accomplished by any conventional means, such as filtration.

The products prepared by the process of this invention exhibit superior properties as sulfur oxide reduction materials, e.g., in fluid catalyst cracking operations, when compared with similar products prepared by conventional methods. For example, the products of this invention have suitable mechanical strength and bulk density, low attrition rate, suitable surface area and pore volume, and good fluidization characteristics.

The process of this invention provides spinel compositions exhibiting surface areas ranging from about 25 to about 600 $m^2$/g.

The embodiments described below are exemplary, without limitation, of the process of this invention.

Example I

An aqueous solution of magnesium nitrate was prepared by dissolving 179.5 g. (1.21 moles) of crystalline magnesium nitrate in deionized water, followed by the addition thereto of sufficient concentrated nitric acid to provide 34.0 g (0.54 mole) $HNO_3$.

An aqueous solution of sodium aluminate was prepared by dissolving 164 g (1.0 mole) sodium aluminate ($Na_2Al_2O_4$) and 22.4 g (0.56 mole) sodium hydroxide in 800 g deionized water.

The solutions of magnesium nitrate and sodium aluminate were added simultaneously, with stirring, to a heel of 2000 g deionized water at respective rates set to maintain the pH of the mixture between 7.0 and 7.5. Upon completion of the addition of the magnesium nitrate solution, additional sodium aluminate solution was added until the pH of the mixture reached 8.5. The precipitate phase was allowed to stand for 24 hours, filtered, slurried with water and refiltered twice, and finally dried for 3 hours at 127°C (260°F) in a stream of flowing air.

The dried filter cake was ground in a hammermill until the fine material passed through a 60-mesh screen. The ground material was then calcined in a stream of flowing air for 3 hours at 732°C (1350°F), to produce a magnesium, aluminum-containing spinel composition.

Example II

The procedure of Example I was repeated except for the replacement of 5.18 g (0.035 mole) of magnesium nitrate with 6.3 g (0.035 mole) of ferrous nitrate to provide 3.5 weight% of iron in the finished spinel product.

Examples III—IX

The preparative procedure of Examples I and II was repeated, employing the respective additional metals shown in Table I and in amounts calculated to provide the weight% of the respective metals set forth in Table I.

Example X

Spinels and modified spinels prepared as in Examples I—IX were fluidized in a gas stream, comprising (by volume) 5% $O_2$, 10% $SO_2$ and 85% $N_2$, after heating at 593°C (1100°F) in a stream of nitrogen gas. After a 30-minute treatment with the $SO_2$-containing gas, remaining $SO_2$ was flushed out with nitrogen. After cooling, analyses for sulfur were conducted on the solids and on the gas stream to determine the efficiency

6

of SOx pickup by formation of metal sulfates. The percent SOx pickup shown in Table I is equal to that percent of the total sulfur passed over the material which is picked up by the material.

Example XI

The sulfur-containing spinels from Example X were heated to 583°C (1000°F) in flowing nitrogen gas and then for 30 minutes in a stream of hydrogen. The spinel was flushed with nitrogen, and, after cooling was analyzed for sulfur removal by reduction of metal sulfates. The percent sulfate reduction shown in Table I is equal to the percent of sulfur originally associated with the material which is removed by the above-noted treatment.

As shown in Table I, a small amount of iron (Examples II and III) greatly improved the effectiveness of the spinel base, both for pickup of SOx and for subsequent release of sulfur, as, for example, in the reactor section and catalyst regeneration section, respectively, of a fluid bed hydrocarbon catalytic cracking unit. Other transition metals also exhibited improvement over the spinel alone, whether employed alone or in combinations.

A spinel base prepared in accordance with Example I and impregnated with 4.5 weight% iron using conventional impregnation techniques gave 58% SOx pickup under similar test conditions.

TABLE I

| Example | Transition metal | SOx pickup, % | Sulfate reduction, % |
|---------|------------------|---------------|----------------------|
| I | | 51 | 63 |
| II | Fe, 3.5 weight% | 68 | 115 |
| III | Fe, 2.1 weight% | 64 | 106 |
| IV | Ce, 2.1 weight% Fe, 5.1 weight% | 73 | 80 |
| V | Fe, 1.2 weight% Cu, 1.1 weight% | 70 | 83 |
| VI | Cu, 2.5 weight% | 80 | 60 |
| VII | Cr, 1.8 weight% | 80 | 73 |
| VIII | Cr, 1.8 weight% | 72 | 69 |
| IX | Sn, 4.4 weight% | 58 | 84 |

## Claims

1. A process for the production of an alkaline earth metal aluminum-containing spinel composition by combining an aqueous solution (a) containing at least one alkaline earth metal component and an aqueous solution (b) containing at least one aluminum component in which the aluminum is present as an anion in an aqueous medium to form a combined mass including a liquid phase and an alkaline earth metal, aluminum-containing precipitate, calcining said precipitate to form said alkaline earth metal, aluminum-containing spinel composition, and including in said spinel composition at least one additional metal component in an amount effective to promote the oxidation of $SO_2$ to $SO_3$ at $SO_2$ oxidation conditions, characterised in that said aqueous solution (a) is an acidic aqueous solution, said aqueous solution (b) is a basic aqueous solution, said at least one additional metal component is provided in said spinel composition by including at least one additional metal component in at least one of said acid solution and said basic solution and the pH of said liquid phase during said combining is maintained in the range of 7.0 to 9.5.

2. The process of Claim 1 wherein step a) comprises substantially simultaneously adding said acidic aqueous solution and said basic aqueous solution to an aqueous liquid.

3. The process of Claim 1 or Claim 2 wherein the atomic ratio of alkaline earth metal to aluminum in said spinel composition is in the range of 0.17 to 1, preferably 0.25 to 0.75, more preferably 0.35 to 0.65.

4. The process of any one of Claims 1 to 3 wherein said alkaline earth metal is magnesium and the pH of said liquid phase during said combining is maintained in the range of 7.0 to 8.5.

5. The process of any one of Claims 1 to 4 wherein said calcining takes place at a temperature in the range of 538°C (1000°F) to 982°C (1800°F), preferably 566°C (1050°F) to 871°C (1600°F), more preferably 593°C (1100°F) to 760°C (1400°F).

7

6. The process of any one of Claims 1 to 5 wherein said acidic aqueous solution includes at least one said additional metal component.

7. The process of Claim 6 wherein said spinel composition includes up to 20% by weight, calculated as elemental metal, of said at least one additional metal component.

8. The process of any one of Claims 1 to 7 wherein said additional metal is selected from the group consisting of bismuth, rare earth metals, antimony, chromium, copper, iron, manganese, vanadium, tin and mixtures thereof.

9. The process of any one of Claims 1 to 8 wherein said precipitate is dried to remove at least a portion of said liquid phase prior to being calcined.

10. The process of Claim 9 wherein said precipitate is dried at a temperature of less than 260°C (500°F).

11. The process of Claim 9 or Claim 10 wherein said precipitate is maintained in contact with at least a portion of said liquid phase for a period of up to 24 hours before being dried.

12. The process of Claim 9, Claim 10 or Claim 11 wherein said precipitate is spray dried and said spinel composition is in the form of particles having diameters in the range of 10 to 250 µm, preferably 20 to 125 µm.

13. The process of any one of Claims 1 to 12 wherein said aluminum component is alkali metal aluminate.

14. The process of any one of Claims 1 to 13 wherein the pH of said liquid phase is maintained in the range of 7.0 to 7.5 until no further acidic aqueous solution is to be combined.

## Patentansprüche

1. Verfahren zur Herstellung einer Erdalkali und Aluminium enthaltenden Spinell-Zusammensetzung durch Zusammenbringen einer wässrigen, wenigstens eine Erdalkalimetall-Komponente enthaltenden Lösung (a) mit einer wässrigen, wenigstens einer Aluminium-Komponente enthaltenden, Lösung (b), in der das Aluminium als Anion in einem wässrigen Medium vorliegt, wodurch eine Kombinationsmasse gebildet wird, die eine flüssige Phase und einen erdalkalialuminiumhaltigen Niederschlag enthält, Calcinieren dieses Niederschlags um die erdalkalialuminiumhaltige Spinell-Zusammensetzung zu erhalten, und Einschluß wenigstens einer zusätzlichen Metallkomponente in den Spinell in einer die Oxidation von $SO_2$ zu $SO_3$ unter $SO_2$-Oxidationsbedingungen wirksam fördernden Menge, dadurch gekennzeichnet, daß die genannte wässrige Lösung (a) eine saure wässrige Lösung ist, die genannte wässrige Lösung (b) eine basische wässrige Lösung ist, die genannte, wenigstens eine, zusätzliche Metallkomponente in dieser Spinell-Zusammensetzung dadurch bereitgestellt wird, daß diese, wenigstens eine, zusätzliche Metallkomponente in dieser Spinell-Zusammensetzung dadurch bereitgestellt wird, daß wenigstens eine zusätzliche Metallkomponente in wenigstens einer der genannten sauren Lösung und der genannten basischen Lösung einbezogen wird und der pH-Wert der flüssigen Phase während des Zusammenbringens im Bereich von 7,0 bis 9,5 gehalten wird.

2. Verfahren nach Anspruch 1, wobei der Schritt (a) die im wesentlichen gleichzeitige Zugabe der genannten sauren Lösung und der genannten basischen Lösung zu einer wässrigen Flüssigkeit beinhaltet.

3. Verfahren nach Anspruch 1 oder Anspruch 2, wobei das Atomverhältnis von Erdalkalimetall zu Aluminium in der Spinell-Zusammensetzung im Bereich von 0,17 bis 1, bevorzugt von 0,25 bis 0,75, und insbesondere zwischen 0,35 bis 0,65 liegt.

4. Verfahren nach einem der Ansprüche 1 bis 3, wobei der Erdalkalimetall Magnesium ist und der pH-Wert der flüssigen Phase während des Zusammenbringens im Bereich von 7,0 bis 8,5 gehalten wird.

5. Verfahren nach einem der Ansprüche 1 bis 4, wobei das genannte Calcinieren bei einer Temperatur im Bereich von 538°C (1000°F) bis 982°C (1800°F), vorzugsweise 566°C (1050°F) bis 871°C (1600°F) und insbesondere zwischen 593°C (1100°F) bis 760°C (1400°F) stattfindet.

6. Verfahren nach einem der Ansprüche 1 bis 5, wobei die genannte saure wässrige Lösung wenigstens eine der zusätzlichen Metallkomponenten enthält.

7. Verfahren nach Anspruch 6, wobei die Spinell-Zusammensetzung bis zu 20 Gew.%, berechnet als elementares Metall, der genannten, wenigstens einen, zusätzlichen Metallkomponente beinhaltet.

8. Verfahren nach einem der Ansprüche 1 bis 7, wobei das genannte zusätzliche Metall aus der Gruppe ausgewählt wird, die aus Wismut, Seltenerdmetallen, Antimon, Chrom, Kupfer, Eisen, Mangan, Vanadium, Zinn und Mischungen daraus besteht.

9. Verfahren nach einem der Ansprüche 1 bis 8, wobei der genannte Niederschlag getrocknet wird um wenigstens einen Teil der flüssigen Phase vor dem Calcinieren zu entfernen.

10. Verfahren nach Anspruch 9, wobei der genannte Niederschlag bei einer Temperatur von weniger als 260°C (500°F) getrocknet wird.

11. Verfahren nach Anspruch 9 oder Anspruch 10, wobei der genannte Niederschlag vor dem Trocknen für einen Zeitraum von bis zu 24 Stunden in Kontakt mit wenistens einem Teil der flüssigen Phase gehalten wird.

12. Verfahren nach Anspruch 9, Anspruch 10 oder Anspruch 11, wobei der genannte Niederschlag sprühgetrocknet wird und die Spinell-Zusammensetzung in Form von Partikeln mit Durchmessern im Bereich von 10 bis 250 µm, bevorzugt 20 bis 125 µm vorliegt.

13. Verfahren nach einem der Ansprüche 1 bis 12, wobei die genannte Aluminium-Komponente als Alkalialuminat vorliegt.

14. Verfahren nach einem der Ansprüche 1 bis 13, wobei der pH-Wert der genannten flüssigen Phase im Bereich von 7,0 bis 7,5 gehalten wird bis keine weitere saure wässrige Lösung mehr damit zusammengebracht werden muß.

**Revendications**

1. Procédé de production d'une composition de spinelle contenant un métal alcalino-terreux et de l'aluminium, par mélange d'une solution aqueuse (a) contenant au moins un constituant renfermant un métal alcalino-terreux et d'une solution aqueuse (b) contenant au moins un constituant renfermant de l'aluminium, dans lequel l'aluminium est présent sous forme d'un anion en milieu aqueux, pour former une masse mixte renfermant une phase liquide et un précipité contenant un métal alcalino-terreux et de l'aluminium, par calcination dudit précipité pour former ladite composition de spinelle contenant un métal alcalino-terreux et de l'aluminium, et par incorporation dans ladite composition de spinelle d'au moins un constituant métallique supplémentaire en une quantité efficace pour activer l'oxydation de $SO_2$ en $SO_3$ dans des conditions d'oxydation de $SO_2$, caractérisé en ce que ladite solution aqueuse (a) est une solution aqueuse acide, ladite solution aqueuse (b) est une solution aqueuse basique, au moins un desdits constituants métalliques supplémentaires est introduit dans ladite composition de spinelle par l'incorporation d'au moins un constituant métallique supplémentaire dans un moins l'une de ladite solution acide et de ladite solution basique, et le pH de ladite phase liquide au cours du mélange est maintenu dans l'intervalle de 7,0 à 9,5.

2. Procédé suivant la revendication 1, dans lequel l'étape (a) consiste à ajouter pratiquement simultanément la solution aqueuse acide et la solution aqueuse basique à un liquide aqueux.

3. Procédé suivant la revendication 1 ou la revendication 2, dans lequel le rapport atomique du métal alcalino-terreux à l'aluminium dans la composition de spinelle est compris dans l'intervalle de 0,17 à 1, avantageusement de 0,25 à 0,75, et de préférence de 0,35 à 0,65.

4. Procédé suivant l'une quelconque des revendications 1 à 3, dans lequel le métal alcalino-terreux est le magnésium et le pH de la phase liquide au cours du mélange est maintenu dans l'intervalle de 7,0 à 8,5.

5. Procédé suivant l'une quelconque des revendications 1 à 4, dans lequel la calcination s'effectue à une température comprise dans l'intervalle de 538°C (1000°F) à 982°C (1800°F), avantageusement de 566°C (1050°F) à 871°C (1600°F), et de préférence de 593°C (1100°F) à 760°C (1400°F).

6. Procédé suivant l'une quelconque des revendications 1 à 5, dans lequel la solution aqueuse acide renferme au moins un constituant métallique supplémentaire.

7. Procédé suivant la revendication 6, dans lequel la composition de spinelle renferme jusqu'à 20% en poids, le calcul étant effectué sur la base du métal élémentaire, d'au moins un constituant métallique supplémentaire.

8. Procédé suivant l'une quelconque des revendications 1 à 7, dans lequel le métal supplémentaire est choisi dans le groupe comprenant le bismuth, des métaux du groupe des terres rares, l'antimoine, le chrome, le cuivre, le fer, le manganèse, le vanadium, l'étain et leurs mélanges.

9. Procédé suivant l'une quelconque des revendications 1 à 8, dans lequel le précipité est séché pour éliminer au moins une partie de la phase liquide avant d'être calciné.

10. Procédé suivant la revendication 9, dans lequel le précipité est séché à une température inférieure à 260°C (500°F).

11. Procédé suivant la revendication 9 ou la revendication 10, dans lequel le précipité est maintenu en contact avec au moins une partie de la phase liquide pendant un temps allant jusqu'à 24 heures, avant son séchage.

12. Procédé suivant la revendication 9, la revendication 10 ou la revendication 11, dans lequel le précipité est séché par pulvérisation et la composition de spinelle est sous forme de particules ayant des diamètres compris dans l'intervalle de 10 à 250 µm, de préférence de 20 à 125 µm.

13. Procédé suivant l'une quelconque des revendications 1 à 12, dans lequel le constituant renfermant de l'aluminium est un aluminate de métal alcalin.

14. Procédé suivant l'une quelconque des revendications 1 à 13, dans lequel le pH de la phase liquide est maintenu dans l'intervalle de 7,0 à 7,5 jusqu'à ce qu'aucune quantité supplémentaire de solution aqueuse acide ne doive être mélangée.